# FASCICULE DE BREVET EUROPEEN

(11) **EP 1 350 900 B1**
(45) Date de publication et mention de la délivrance du brevet: **28.01.2009**
(21) Numéro de dépôt: 03360045.3
(22) Date de dépôt: 02.04.2003
(51) Int. Cl.: E04D 11/02, E04D 13/16, C09J 195/00

(54) **Procédé d'isolation et d'étanchéification de toitures sensiblement planes**
Verfahren zu der Isolierung und der Abdichtung von flachen Dächern
Insulating and waterproofing method for flat roofs

(30) Priorité: 05.04.2002 FR 0204278
(43) Date de publication de la demande: 08.10.2003
(73) Titulaire: SOPREMA, 67100 Strasbourg (FR)
(72) Inventeur: Bindschedler, Pierre Etienne, 67210 Obernai (FR); Perrin, Rémi, 67870 Bischoffsheim (FR); Schall, Corinne, 67000 Strasbourg (FR); Nouri, Arnaud, 67230 Kogenheim (FR)
(74) Mandataire: Nuss, Pierre

(56) Documents cités:
- EP-A- 0 477 127
- EP-A- 1 013 716
- DE-A- 2 502 374
- US-A- 3 726 754
- US-A- 4 651 494

## Description

La présente invention concerne le domaine du revêtement de supports, notamment de l'isolation thermo-acoustique et de l'étanchéité de toitures sensiblement planes, et a pour objet un procédé d'isolation et d'étanchéification de telles toitures et un enduit liquide barrière à la vapeur apte pour la mise en oeuvre d'un tel procédé.

Dans certaines applications, la mise en place et la solidarisation de matériaux d'isolation et d'étanchéification doit répondre à des critères particuliers.

Ainsi, dans le secteur de l'étanchéité des toitures, notamment des toitures terrasses avec support d'étanchéité en béton, il est nécessaire, en cas d'utilisation d'un isolant thermique non pare-vapeur, d'appliquer une membrane barrière à la vapeur d'eau avant d'appliquer ledit isolant.

En effet, l'absence de pare-vapeur entraînerait dans les contrées tempérées un point de rosée à l'intérieur de l'isolant thermique.

D'autre part, afin de résister aux efforts de dépression et d'arrachement dus au vent, les systèmes d'étanchéité (isolant + membrane d'étanchéité extérieure) doivent être soit ballastés, soit parfaitement adhérents au support.

Or, le procédé de fixation mis en oeuvre dans l'état de l'art des systèmes non ballastés est aujourd'hui généralement le suivant :
- Application d'un primaire d'accrochage sur le support béton ;
- Mise en place de la membrane pare-vapeur ;
- Collage de l'isolant thermique.

Une fois ce travail préparatoire de fixation de l'isolant réalisé, les membranes d'étanchéités sont appliquées sur l'isolant thermique.

Toutefois, ce procédé présente des inconvénients et des limitations.

Ainsi, sa nécessaire décomposition en trois phases opératoires successives, nécessitant chacune un matériau et, le cas échéant, des outils différents le rend coûteux en main d'oeuvre et en matériaux.

En outre, les membranes pare-vapeur sont généralement des structures minces sujettes au déchirement ou à la perforation durant leur manipulation et après installation.

De plus, pour aboutir à un accrochage performant du pare-vapeur sur le support, il y a lieu de réaliser préalablement un traitement de la surface dudit support pour l'aplanir et le lisser, pour effacer les inégalités et aboutir à un accrochage sur toute la surface dudit support.

Enfin, pour des raisons de viabilité économique (coûts matière et de main d'oeuvre), l'isolant n'est généralement collé sur la membrane pare-vapeur que par des zones espacées, d'où il résulte une force d'accrochage limitée et l'impossibilité de fixer des isolants de faible cohésion.

Par le document US 3 726 754, on connaît par ailleurs un procédé de réalisation d'un système d'isolation et d'étanchéité pour toitures composé d'une membrane étanche intermédiaire collée sur le support et de panneaux de mousse collés sur ladite membrane intermédiaire. Il est également prévu que ladite membrane intermédiaire peut être appliquée sous la forme d'un primaire liquide par pulvérisation ou au moyen d'une truelle.

Néanmoins, le système connu de ce document présente des inconvénients majeurs.

En effet, compte tenu de la structure discontinue de la couche d'isolation (panneaux de mousse), cette dernière sera nécessairement non étanche au moins sur le long terme, et en particulier au niveau des joints entre panneaux adjacents, mêmes si les panneaux présentent, en eux-mêmes, une structure étanche à l'eau. Au cours du vieillissement dudit système, il se produira donc des infiltrations, avec stagnation de l'eau sous les panneaux isolants.

De plus, et notamment dans les régions tempérées, on assistera à une condensation dans l'épaisseur de la couche d'isolation, d'où une perte des qualités isolantes de ladite couche, voire un endommagement à long terme de cette dernière.

La présente invention a pour but de pallier au moins certains des inconvénients ci-dessus et de surmonter au moins certaines des limitations précitées.

A cet effet, l'invention a pour objet principal un procédé d'isolation et d'étanchéification d'une toiture formant un support sensiblement plan, telle qu'une toiture terrasse en béton, caractérisé en ce qu'il consiste à :
- enduire ledit support avec une composition liquide ou visqueuse appliquée de manière continue, en enrobant les aspérités et en remplissant les creux ou cavités débouchants présents à la surface dudit support, de manière à obtenir une surface supérieure lisse
- appliquer une couche isolante ou les éléments discrets destinés à former une couche isolante sur la surface enduite dudit support avant solidification de la couche d'enduit appliquée préalablement, ladite couche d'enduit formant, après séchage ou polymérisation, barrière à la vapeur d'eau et agent d'adhérence de la couche isolante sur ledit support de fixation et, enfin,
- appliquer sur la couche isolante un revêtement d'étanchéité, comprenant au moins une couche de membranes bitumineuses, synthétiques ou analogues.

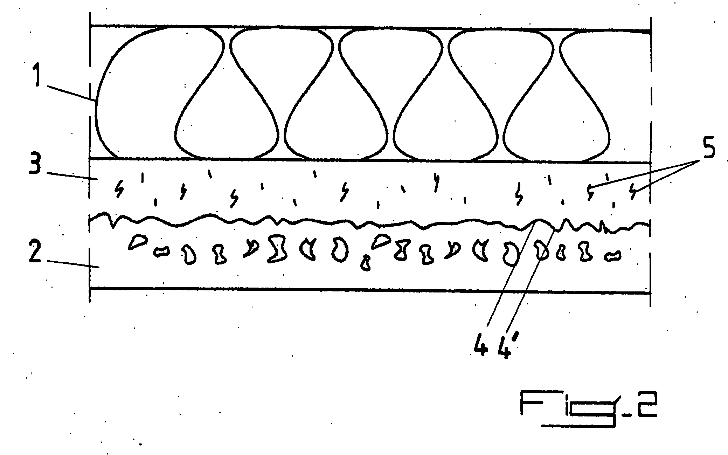

L'invention sera mieux comprise, grâce à la description ci-après, qui se rapporte à un mode de réalisation préféré, donné à titre d'exemple non limitatif, et expliqué avec référence à la figure 2 des dessins schématiques annexés, dans lesquels :
La figure 1 est une vue en élévation latérale en coupe d'un matériau isolant fixé sur un support en béton selon le procédé actuel de l'état de la technique, et,
La figure 2 est une vue en coupe d'un matériau isolant fixé sur un support en béton selon le procédé conforme à l'invention.

Comme cela ressort de la figure 2 des dessins annexés, le procédé selon l'invention consiste essentiellement à :
- enduire ledit support 2 avec une composition liquide ou visqueuse 3, en enrobant les aspérités 4 et en remplissant les creux ou cavités 4' débouchants présentes à la surface dudit support 2,
- appliquer ladite couche isolante 1 ou les éléments discrets destinés à former ladite couche isolante 1 sur la surface enduite dudit support 2 avant solidification de la couche d'enduit 3 appliquée préalablement, ladite couche d'enduit 3 formant, après séchage ou polymérisation, barrière à la vapeur d'eau et agent d'adhérence de la couche isolante 1 sur ledit support de fixation 2 et, enfin,
- appliquer sur la couche isolante 1 un revêtement d'étanchéité 6, comprenant au moins une couche de membranes bitumineuses, synthétiques ou analogues.

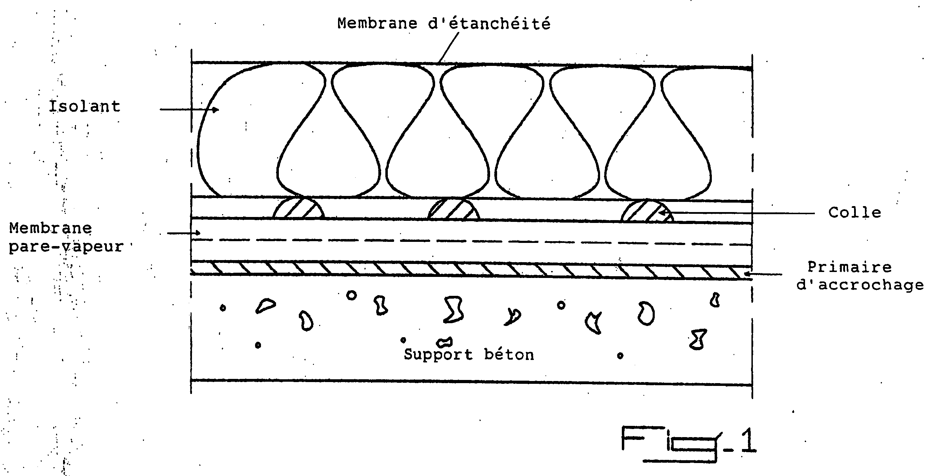

Ainsi, l'invention permet de remplacer les trois étapes du procédé connu, mentionnées précédemment (et dont le résultat est illustré sur la figure 1) et coûteuses en main d'oeuvre et en matériaux (trois matériaux différents), par une seule étape opératoire, en utilisant un produit sous forme d'enduit 3 facile à étaler sur le support 2 et remplissant simultanément les trois fonctions suivantes : pare-vapeur (barrière contrôlée à la vapeur), adhérence au support 2 et collage de l'isolant 1.

Selon une première caractéristique de l'invention, la composition 3 formant enduit est choisie dans le groupe formé par les compositions bitumineuses à base d'un mélange bitume / élastomère thermoplastique et les compositions à base d'un mélange bitume / polyuréthane ou dans le groupe formé par les mélanges à base d'un prépolymère de polyuréthane, avec ou sans solvant, et les mélanges résine / durcisseur (tel que par exemple résine époxy / durcisseur aminé).

Avantageusement, la composition 3 formant enduit présente une viscosité à 20° C, comprise entre 50 et 300 Poises, préférentiellement entre 100 et 200 Poises, et très préférentiellement entre 100 et 150 Poises.

Ainsi, la fluidité de la composition 3 sera fixée de telle manière que l'enduction puisse être réalisée au moyen d'une brosse, d'un rouleau, d'une spatule, d'une raclette ou d'un outil analogue et présente une bonne applicabilité entre 5 et 40° C.

De plus, la quantité de composition liquide ou visqueuse 3, appliquée sur toute la surface du support 2 de manière continue, est au moins suffisante pour obtenir une surface supérieure lisse (compensation des inégalités du support 2) et aboutir à une adhérence de la couche isolante 1 sur sensiblement la totalité de sa face inférieure.

Cette disposition permettra le collage de matériaux isolants de faible cohésion (laine minérale et perlite par exemple), tout en fournissant une couche d'enduit 3, liant la couche isolante 1 au support 2, avec une grande cohésion structurelle, car à consistance homogène (par rapport aux trois couches [primaire / pare-vapeur / colle] de l'art antérieur).

Pour pouvoir réaliser le procédé décrit ci-dessus, l'enduit mis en oeuvre, préférentiellement sous forme de composition sensiblement liquide, devra comprendre un mélange de substances compatibles entre elles et contribuant en combinaison à l'expression des trois fonctions précitées, chacune d'entre elles pouvant être atteintes dans la pratique de plusieurs manières différentes, le cas échéant en jouant sur plusieurs paramètres et/ou sur les types et les quantités de composés entrant dans sa formulation.

Ainsi, la fonction d'adhérence au support 2, en particulier en béton, peut être obtenue en choisissant l'une ou plusieurs des possibilités suivantes :
- Grande fluidité du produit à l'application pour avoir un bon mouillage du support béton.
- Utilisation de dope(s) d'adhésivité facilitant l'adhérence, y compris sur le support béton humide.
- Utilisation de matériaux aux propriétés adhésives remarquables : bitume modifié ou non, élastomères thermoplastiques, pré-polymère polyuréthanne mono composant résine époxy ou polyuréthanne bi-composant ou analogue.

La fonction de barrière à la vapeur d'eau pourra être atteinte en intégrant dans l'enduit 3 des matériaux ou des substances présentant de bonnes propriétés hydrophobes et de résistance au transfert de la vapeur d'eau. Dans certains cas, le bitume seul pourra suffire pour obtenir une fonction barrière à la vapeur ou pare-vapeur de degré suffisant.

Enfin, pour réaliser ou renforcer la fonction de collage de l'isolant, une solution existante de collage à froid pourra éventuellement être associée à l'enduit 3 mis en oeuvre dans le cadre de l'invention.

Parmi ces solutions potentielles, on trouve notamment la colle bitumineuse solvantée, la colle polyuréthanne et la colle bitume / polyuréthanne mono ou bi-composante.

La présente invention a donc également pour objet un enduit utilisé pour la mise en oeuvre du procédé décrit ci-dessus, permettant notamment de remplir les trois fonctions mentionnées ci-dessus.

A cet effet, l'enduit 3 consiste en une composition préférentiellement sensiblement liquide, c'est-à-dire une viscosité telle que mentionnée ci-dessus, et comprenant, en poids, de :
- 0 à 30 % de solvant,
- 0 à 60 % de bitume,
- 0 à 40 % d'agent(s) fluidifiant(s),
- 10 à 40 % de charge(s) minérale(s) et/ou métallique(s),
- 0 à 10 % d'additif(s) renforçant les propriétés de collage,
- 0 à 50 % d'au moins un composant structurant et adhésif choisi dans le groupe formé par les polymères élastomériques thermoplastiques, les prépolymères de polyuréthane et les mélanges résine/durcisseur.

Conformément à un premier mode de réalisation de l'invention, la composition 3 est constituée, en poids, de :
- 8 à 15 % de solvant,
- 35 à 45 % de bitume,
- 0 à 20 % d'agent(s) fluidifiant(s),
- 10 à 30 % de charges minérales ou métalliques,
- 0 à 10 % d'additif(s) renforçant les propriétés de collage,
- 0 à 25 % d'au moins un composant structurant et adhésif choisi dans le groupe formé par les polymères élastomériques thermoplastiques, les prépolymères de polyuréthane et les mélanges résine/durcisseur.

Le ou les élastomères thermoplastiques modifiant le bitume pourront, par exemple, être choisis dans le groupe formé par SBS (Styrène-Butadiène-Styrène), SIS (Styrène-Isoprène-Styrène), EVA (copolymère éthylène / acétate de vinyle) et les mélanges de ceux-ci.

Avantageusement, le bitume est un bitume de distillation directe, par exemple du type 70/100. Toutefois, l'enduit pourra également être réalisé avec un bitume oxydé ou semi-soufflé.

Conformément à un second mode de réalisation préféré de l'invention, la composition 3 consiste en un mélange à base de résine réactive, préférentiellement constituée, en poids, de :
- 15 à 25 % de solvant,
- 15 à 25 % d'agent(s) fluidifiant(s),
- 15 à 35 % de charges minérales et/ou métalliques,
- 0 à 5 % d'un additif renforçant les propriétés de collage,
- 20 à 40 % d'un prépolymère PUR ou d'un mélange résine/durcisseur.

Conformément à un troisième mode de réalisation préféré de l'invention, la composition 3 consiste en un mélange sans solvant à base de prépolymère de polyuréthane, préférentiellement constituée, en poids, de :
- 30 à 40 % d'agent fluidifiant,
- 15 à 30 % de charge(s) minérale(s) et/ou métallique(s),
- 0 à 5 % d'un additif renforçant les propriétés de collage,
- 30 à 50 % d'un prépolymère polyuréthane.

Ladite au moins une charge minérale ou métallique peut être choisie dans le groupe formé par la poudre d'ardoise, la pâte d'aluminium, la craie, les alumino silicates et le mica.

Préférentiellement la charge consiste en des paillettes pelliculantes, qui forment après séchage de l'enduit 3 un film continu en surface d'aluminium ou de mica.

Conformément à une première variante de réalisation de l'invention, l'enduit 3 consiste en une composition monocomposante.

Conformément à une seconde variante de réalisation de l'invention, l'enduit 3 consiste en une composition bicomposante dont un premier composant comprend notamment un polyol et dont le second composant comprend notamment un isocyanate.

Dans cette seconde variante, le couple polyol/isocyanate peut, par exemple, correspondre au couple polybutadiène hydroxylé / méthyldiphényldiisocyanate.

Conformément à une troisième variante de l'invention, l'enduit 3 consiste en une composition bicomposante, dont un premier composant comprend notamment une résine époxy et dont le second composant comprend notamment un durcisseur aminé.

Afin de renforcer la cohésion structurelle de l'enduit 3, notamment lorsqu'il est appliqué sur une épaisseur relativement importante, l'enduit 3 peut comprendre une charge structurante additionnelle sous forme de fibres 5 de faible longueur, préférentiellement des fibres en un matériau polymère.

A titre d'exemples de réalisations pratiques de l'invention, on décrira à présent quatre formulations pondérales concrètes d'enduit 3 selon l'invention, ainsi que leurs caractéristiques d'application et leurs propriétés.

### Exemple 1 :

| Composant A : | | Composant B : | |
|---|---|---|---|
| Bitume de distillation directe, préf. 70/100 | 40,00 | | |
| Solvant | 10,00 | MDI : | 2,50 |
| Huile plastifiante | 8,00 | (méthyldiphényldiisocyanate) | |
| Poudre d'ardoise | 21,00 | Rapport A/B : | 40/1 |
| Polybutadiène hydroxylé | 21,00 | | |

### Adhérence :

- Quantité de colle appliquée : 1,5 Kg/m²
- Adhérence PSE (Polystyrène expansé : 25Kg/m³) sur béton : 1,2daN/cm²
   (rupture cohésive dans PSE)

### Perméabilité à la vapeur d'eau :

- Inférieur à 0,1 g/m².24h

### Exemple 2 :

| | |
|---|---|
| Bitume de distillation directe, de préférence 70/100 | 40,00 |
| Solvant | 13,00 |
| Résine tackifiante | 4,00 |
| Mélange SBS/SIS | 3,00 |
| Poudre d'ardoise | 18,00 |
| Pâte d'aluminium | 22,00 |

### Adhérence :

- Quantité de colle appliquée : 2 Kg/m²
- Adhérence PSE sur béton après 28 jours : 6N/cm²
   (50 % rupture cohésive dans PSE ; 50 % rupture cohésive dans liant de collage)

### Perméabilité à la vapeur d'eau :

- 0,10 g/m².24h.

### Exemple 3 :

- Prépolymère polyuréthanne : 29,00
- Agent diluant : 23,00
- Solvant : 22,50
- Craie : 25,50

### Exemple 4 :

- Prépolymère polyuréthanne : 40,00
- Agent fluidifiant : 40,50
- Craie: 19,00
- Silane : 0,50

L'invention a également pour objet un système composite d'isolation et d'étanchéité pour toiture formant un support sensiblement plan, telle qu'une toiture terrasse en béton, obtenu au moyen du procédé ci-dessus, caractérisé en ce qu'il présente une structure composite stratifiée et est constitué, en partant du support 2, par une couche d'enduit 3 séchée ou polymérisé formant simultanément barrière à passage contrôlé pour la vapeur d'eau, revêtement de nivellement et agent d'adhérence surfacique sur le support 2, par une couche isolante 1 fixée par la couche d'enduit 3 sur le support 2, ladite couche isolante 1 étant préférentiellement formée par juxtaposition d'éléments discrets sous forme de bandes ou de panneaux, et par un revêtement d'étanchéité 6, comprenant au moins une couche de membranes bitumineuses, synthétiques ou analogues, dont les zones de bord adjascentes se chevauchent avantageusement au moins partiellement.

Le revêtement d'étanchéité 6 supérieur pourra notamment être formé d'une couche constituée de membranes bitumineuses collées à froid ou à chaud sur la couche d'isolation 1, ces membranes étant elles-mêmes pourvues d'un revêtement supérieur de protection mécanique et/ou chimique, intégré auxdites membranes.

Bien entendu, l'invention n'est pas limitée aux modes de réalisation décrits et représentés au dessin annexé. Des modifications restent possibles, notamment du point de vue de la constitution des divers éléments ou par substitution d'équivalents techniques, sans sortir pour autant du domaine de protection de l'invention.

## Revendications

1. Procédé d'isolation et d'étanchéification d'une toiture formant un support sensiblement plan, telle qu'une toiture terrasse en béton, **caractérisé en ce qu'**il consiste essentiellement à :
- enduire ledit support (2) avec une composition liquide ou visqueuse (3) appliquée de manière continue, en enrobant les aspérités (4) et en remplissant les creux ou cavités (4') débouchants présents à la surface dudit support (2), de manière à obtenir une surface supérieure lisse
- appliquer une couche isolante (1) ou les éléments discrets destinés à former une couche isolante (1) sur la surface enduite dudit support (2) avant solidification de la couche d'enduit (3) appliquée préalablement, ladite couche d'enduit (3) formant, après séchage ou polymérisation, barrière à la vapeur d'eau et agent d'adhérence de la couche isolante (1) sur ledit support de fixation (2) et, enfin,
- appliquer sur la couche isolante (1) un revêtement d'étanchéité (6), comprenant au moins une couche de membranes bitumineuses, synthétiques ou analogues.

2. Procédé selon la revendication 1, **caractérisé en ce que** la composition (3) formant enduit est choisie dans le groupe formé par les compositions bitumineuses à base d'un mélange bitume / élastomère thermoplastique et les compositions à base d'un mélange bitume / polyuréthane.

3. Procédé selon la revendication 1, **caractérisé en ce que** la composition (3) formant enduit est choisie dans le groupe formé par les mélanges à base d'un prépolymère de polyuréthane, avec ou sans solvant, et les mélanges résine / durcisseur.

4. Procédé selon l'une quelconque des revendications 1 à 3, **caractérisé en ce que** la composition (3) formant enduit présente une viscosité à 20° C, comprise entre 50 et 300 Poises, préférentiellement entre 100 et 200 Poises.

5. Procédé selon l'une quelconque des revendications 1 à 4, **caractérisé en ce que** l'enduction est réalisée au moyen d'une brosse, d'un rouleau, d'une spatule, d'une raclette ou d'un outil analogue et **en ce que** la quantité de composition liquide ou visqueuse (3), appliquée sur toute la surface du support de manière continue, est au moins suffisante pour obtenir une surface supérieure lisse et aboutir à une adhérence de la couche isolante (1) sur sensiblement la totalité de sa face inférieure.

6. Utilisation d'un enduit liquide ou visqueux dans le cadre du procédé d'isolation et d'étanchéification selon l'une quelconque des revendications 1 à 5, **caractérisé en ce que** l'enduit consiste en une composition (3) préférentiellement sensiblement liquide comprenant, en poids, de :
- 0 à 30 % de solvant,
- 0 à 60 % de bitume,
- 0 à 40 % d'agent(s) fluidifiant(s),
- 10 à 40 % de charge(s) minérale(s) et/ou métallique(s),
- 0 à 10 % d'additif(s) renforçant les propriétés de collage,
- 0 à 50 % d'au moins un composant structurant et adhésif choisi dans le groupe formé par les polymères élastomériques thermoplastiques, les prépolymères de polyuréthane et les mélanges résine/durcisseur, l'enduit remplissant, après séchage ou polymérisation, les trois fonctions de : pare-vapeur, adhérence au support (2) et collage de l'isolant (1).

7. Utilisation selon la revendication 6, **caractérisée e**n ce que l'enduit présente une viscosité à 20° C, comprise entre 50 et 300 Poises, préferentiellement entre 100 et 200 Poises.

8. Utilisation selon l'une quelconque des revendications 6 et 7, **caractérisée en ce que** la composition (3) est constituée, en poids, de :
- 8 à 15% de solvant,
- 35 à 45% de bitume,
- 0 à 20 % d'agent(s) fluidifiant(s),
- 10 à 30 % de charges minérales ou métalliques,
- 0 à 10 % d'additif(s) renforçant les propriétés de collage,
- 0 à 25 % d'au moins un composant structurant et adhésif choisi dans le groupe formé par les polymères élastomériques thermoplastiques, les prépolymères de polyuréthane et les mélanges résine/durcisseur.

9. Utilisation selon l'une quelconque des revendications 6 et 7, **caractérisée en ce que** la composition (3) consiste en un mélange à base de résine réactive, préférentiellement constituée, en poids, de :
- 15 à 25 % de solvant,
- 15 à 25 % d'agent(s) fluidifiant(s),
- 15 à 35 % de charges minérales et/ou métalliques,
- 0 à 5 % d'un additif renforçant les propriétés de collage,
- 20 à 40 % d'un prépolymère PUR ou d'un mélange résine/durcisseur.

10. Utilisation selon l'une quelconque des revendications 6 et 7, **caractérisée e**n ce que la composition (3) consiste en un mélange sans solvant à base de prépolymère de polyuréthane, préférentiellement constituée, en poids, de :
- 30 à 40 % d'agent fluidifiant,
- 15 à 30 % de charge(s) minérale(s) et/ou métallique(s),
- 0 à 5 % d'un additif renforçant les propriétés de collage,
- 30 à 50 % d'un prépolymère polyuréthane.

11. Utilisation selon l'une quelconque des revendications 6 à 8, **caractérisée en ce que** le bitume est un bitume de distillation directe, par exemple du type 70/100, et **en ce que** ladite au moins une charge minérale ou métallique est choisie dans le groupe formé par la poudre d'ardoise, la pâte d'aluminium, les alumino silicates, la craie et le mica.

12. Utilisation selon la revendication 11, **caractérisée en ce que** la charge consiste en des paillettes pelliculantes de mica ou d'aluminium.

13. Utilisation selon l'une quelconque des revendications 6 à 12, **caractérisée en ce que** l'enduit consiste en une composition monocomposante.

14. Utilisation selon l'une quelconque des revendications 6 à 9 et 11 à 13, **caractérisée en ce que** l'enduit consiste en une composition bicomposante, dont un premier composant comprend notamment un polyol et dont le second composant comprend notamment un isocyanate.

15. Utilisation selon l'une quelconque des revendications 6 à 9 et 11 à 13, **caractérisée en ce que** l'enduit consiste en une composition bicomposante, dont un premier composant comprend notamment une résine époxy et dont le second composant comprend notamment un durcisseur aminé.

16. Utilisation selon l'une quelconque des revendications 6 à 15, **caractérisée e**n ce que l'enduit comporte une charge structurante additionnelle sous forme de fibres (5) de faible longueur, préférentiellement des fibres en un matériau polymère.

17. Système composite d'isolation et d'étanchéité pour toiture formant un support sensiblement plan, telle qu'une toiture terrasse en béton, obtenu au moyen du procédé selon l'une quelconque des revendications 1 à 5, **caractérisé en ce qu'**il présente une structure composite stratifiée et est constitué, en partant du support (2), d'une part, par une couche d'enduit (3) séchée ou polymérisé, continue et à surface supérieure lisse formant simultanément barrière à passage contrôlé pour la vapeur d'eau, revêtement de nivellement et agent d'adhérence surfacique sur le support (2), d'autre part, par une couche isolante (1) fixée par la couche d'enduit (3) sur le support (2), ladite couche isolante (1) étant préférentiellement formée par juxtaposition d'éléments discrets sous forme de bandes ou de panneaux, et, enfin, par un revêtement d'étanchéité (6), comprenant au moins une couche de membranes bitumineuses, synthétiques ou analogues, dont les zones de bord adjacentes se chevauchent avantageusement au moins partiellement.

## Claims

1. Method of insulating and sealing a roofing forming a substantially flat substrate, such as a concrete terrace roofing, **characterised in that** it basically comprises:
- coating the said substrate (2) with a liquid or viscous composition (3) applied in a continuous manner, by covering rough areas (4) and by filling hollows or emergent cavities (4') which are present on the surface of said substrate (2) in such a way as to obtain a smooth upper surface,
- applying an insulating layer (1) or individual elements intended to form an insulating layer (1) on the coated surface of the said substrate (2) before solidification of the previously applied coating layer (3), whereby the said coating layer (3) forms, after drying or polymerisation, a water vapour barrier and an agent for adhesion of the insulating layer (1) to the fixing substrate (2), and, finally,
- applying to the insulating layer (1) a sealing coating (6) comprising at least one layer of bituminous or synthetic or similar membranes.

2. Method as claimed in Claim 1, **characterised in that** the composition (3) forming a coating is selected from amongst the group formed by bituminous compositions based on a bitumen/thermoplastic elastomer mixture and compositions based on a bitumen/polyurethane mixture.

3. Method as claimed in Claim 1, **characterised in that** the composition (3) forming a coating is selected from amongst the group formed by mixtures based on a polyurethane prepolymer, with or without solvent, and resin/hardener mixtures.

4. Method as claimed in any one of Claims 1 to 3, **characterised in that** the composition (3) forming a coating has a viscosity at 20°C between 50 and 300 poise, preferably between 100 and 200 poise.

5. Method as claimed in any one of Claims 1 to 4, **characterised in that** the coating is carried out by means of a brush, a roller, a spatula, a scraper or a similar tool, and that the quantity of liquid or viscous composition (3) continuously applied over the entire surface of the substrate is at least sufficient in order to obtain a smooth upper surface and to ensure adhesion of the insulating layer (1) over substantially all of its lower face.

6. Use of a liquid or viscous coating within the scope of the method of insulating and sealing as claimed in any one of Claims 1 to 5, **characterised in that** the coating consists of a composition (3) which is preferably substantially liquid comprising, by weight:
- 0 to 30% of solvent,
- 0 to 60% of bitumen,
- 0 to 40% of liquefier(s),
- 10 to 40% of mineral and/or metal filler(s),
- 0 to 10% of additive(s) reinforcing the bonding properties,
- 0 to 50% of at least one structuring and adhesive component selected from amongst the group formed by thermoplastic elastomeric polymers, polyurethane prepolymers and resin/hardener mixtures,
wherein the coating, after drying or polymerisation, fulfils the three functions of: vapour barrier, adhesion to the substrate (2) and bonding of the insulation (1).

7. Use as claimed in Claim 6, **characterised in that** the coating has a viscosity at 20°C between 50 and 300 poise, preferably between 100 and 200 poise.

8. Use as claimed in any one of Claims 6 and 7, **characterised in that** the composition (3) consists of, by weight:
- 8 to 15% of solvent,
- 35 to 45% of bitumen,
- 0 to 20% of liquefier(s),
- 10 to 30% of mineral or metal fillers,
- 0 to 10% of additive(s) reinforcing the bonding properties,
- 0 to 25% of at least one structuring and adhesive component selected from amongst the group formed by thermoplastic elastomeric polymers, polyurethane prepolymers and resin/hardener mixtures.

9. Use as claimed in any one of Claims 6 and 7, **characterised in that** the composition (3) consists of a mixture that is based on reactive resin, preferably consisting of, by weight:
- 15 to 25% of solvent,
- 15 to 25% of liquefier(s),
- 15 to 35% of mineral and/or metal fillers,
- 0 to 5% of an additive reinforcing the bonding properties,
- 20 to 40% of a PUR prepolymer or a resin/hardener mixture.

10. Use as claimed in any one of Claims 6 and 7, **characterised in that** the composition (3) consists of a mixture without a solvent based on polyurethane prepolymer, preferably consisting of, by weight:
- 30 to 40% of liquefier,
- 15 to 30% of mineral and/or metal filler(s),
- 0 to 5% of an additive reinforcing the bonding properties,
- 30 to 50% of a polyurethane prepolymer.

11. Use as claimed in any one of Claims 6 to 8, **characterised in that** the bitumen is a direct distillation bitumen, for example of the 70/100 type, and that at least one said mineral or metal filler is selected from amongst the group formed by slate powder, aluminium paste, aluminosilicates, chalk and mica.

12. Use as claimed in Claim 11, **characterised in that** the filler consists of laminating flakes of mica or aluminium.

13. Use as claimed in any one of Claims 6 to 12, **characterised in that** the coating consists of a monocomponent composition.

14. Use as claimed in any one of Claims 6 to 9 and 11 to 13, **characterised in that** the coating consists of a bicomponent composition of which a first component comprises in particular a polyol and of which the second component comprises in particular an isocyanate.

15. Use as claimed in any one of Claims 6 to 9 and 11 to 13, **characterised in that** the coating consists of a bicomponent composition, of which a first component comprises in particular an epoxy resin and of which the second component comprises in particular an amine hardener.

16. Use as claimed in any one of Claims 6 to 15, **characterised in that** the coating comprises an additional structuring filler in the form of short fibres (5), preferably fibres made from a polymer material.

17. Composite insulating and sealing system for roofing forming a substantially flat substrate, such as a concrete terrace roofing, obtained by means of the method as claimed in any one of Claims 1 to 5, **characterised in that**, starting from the substrate (2), it has a stratified composite structure and consists of on the one hand a dried or polymerised coating layer (3) which is continuous and has a smooth upper surface and simultaneously forms a controlled barrier to the passage of water vapour, a levelling coating and an agent for surface adhesion on the substrate (2), and on the other hand an insulating layer (1) fixed by the coating layer (3) on the substrate (2), the said insulating layer (1) being preferably formed by the juxtaposition of individual elements in the form of strips or panels, and, finally, a sealing coating (6) comprising at least one layer of bituminous, synthetic or similar membranes of which the adjacent edge zones advantageously overlap one another at least partially.

## Patentansprüche

1. Verfahren zur Isolierung und Abdichtung eines Daches, das einen im wesentlichen ebenen Träger bildet, wie zum Beispiel ein Betonterrassendach, **dadurch gekennzeichnet, daß** es im wesentlichen darin besteht:
- den Träger (2) mit einer kontinuierlich aufgebrachten, flüssigen oder viskosen Zusammensetzung (3) zu überziehen, wobei die Unebenheiten (4) eingebettet und die an der Oberfläche des Trägers (2) vorhandenen offenen Vertiefungen oder Hohlräume (4') aufgefüllt werden, so daß eine glatte Oberseite erhalten wird,
- eine Isolierschicht (1) oder die separat ausgebildeten Elemente, die dazu bestimmt sind, eine Isolierschicht (1) zu bilden, vor der Verfestigung der zuvor aufgebrachten Überzugsschicht (3) auf die überzogene Oberfläche des Trägers (2) aufzubringen, wobei die Überzugsschicht (3) nach der Trocknung oder Polymerisation eine Wasserdampfbarriere sowie ein Mittel für die Haftung der Isolierschicht (1) auf dem Befestigungsträger (2) bildet, und schließlich
- auf die Isolierschicht (1) einen Dichtungsüberzug (6) aufzubringen, der wenigstens eine Schicht aus bituminösen Membranen, synthetischen Membranen oder ähnlichen umfaßt.

2. Verfahren nach Anspruch 1, **dadurch gekennzeichnet, daß** die den Überzug bildende Zusammensetzung (3) aus der Gruppe gebildet von bituminösen Zusammensetzungen auf Basis eines Gemischs aus Bitumen und thermoplastischem Elastomer sowie von Zusammensetzungen auf Basis eines Gemischs aus Bitumen und Polyurethan ausgewählt ist.

3. Verfahren nach Anspruch 1, **dadurch gekennzeichnet, daß** die den Überzug bildende Zusammensetzung (3) aus der Gruppe gebildet von Gemischen auf Basis eines Polyurethan-Präpolymers, mit oder ohne Lösungsmittel, sowie von Gemischen aus Harz und Härtemittel ausgewählt ist.

4. Verfahren nach einem der Ansprüche 1 bis 3, **dadurch gekennzeichnet, daß** die den Überzug bildende Zusammensetzung (3) eine Viskosität bei 20°C aufweist, die zwischen 50 und 300 Poise, vorzugsweise zwischen 100 und 200 Poise liegt.

5. Verfahren nach einem der Ansprüche 1 bis 4, **dadurch gekennzeichnet, daß** das Beschichten mit Hilfe einer Bürste, einer Rolle, einem Spatel, einem Schaber oder einem ähnlichen Werkzeug durchgeführt wird, und daß die auf die gesamte Oberfläche des Trägers kontinuierlich aufgebrachte Menge an flüssiger oder viskoser Zusammensetzung (3) wenigstens ausreicht, um eine glatte Oberseite zu erhalten und um eine Haftung der Isolierschicht (1) auf im wesentlichen ihrer gesamten Unterseite zu erzielen.

6. Verwendung eines flüssigen oder viskosen Überzugs im Rahmen des Isolier- und Abdichtungsverfahrens nach einem der Ansprüche 1 bis 5, **dadurch gekennzeichnet, daß** der Überzug aus einer vorzugsweise im wesentlichen flüssigen Zusammensetzung (3) besteht, die folgendes enthält:
- 0 bis 30 Gew.-% Lösungsmittel,
- 0 bis 60 Gew.-% Bitumen,
- 0 bis 40 Gew.-% Verflüssigungsmittel,
- 10 bis 40 Gew.-% mineralische(n) und/oder metallische(en) Füllstoff(e),
- 0 bis 10 Gew.-% eines Zusatzes (von Zusätzen), der bzw. die die Klebeeigenschaften verbessert bzw. verbessern,
- 0 bis 50 Gew.-% wenigstens einer Strukturier- und Klebekomponente, die aus der Gruppe bestehend aus thermoplastischen Elastomer-Polymeren, Polyurethan-Prepolymeren und Harz-/Härtemittel-Gemischen ausgewählt ist, wobei der Überzug nach der Trocknung oder Polymerisation die drei Funktionen, nämlich Wasserdampfschutz, Haften an dem Träger (2) sowie Verkleben des Isoliermaterials (1), erfüllt.

7. Verwendung nach Anspruch 6, **dadurch gekennzeichnet, daß** der Überzug eine Viskosität bei 20°C aufweist, die zwischen 50 und 300 Poise, vorzugsweise zwischen 100 und 200 Poise liegt.

8. Verwendung nach einem der Ansprüche 6 und 7, **dadurch gekennzeichnet, daß** die Zusammensetzung besteht aus:
- 8 bis 15 Gew.-% Lösungsmittel,
- 35 bis 45 Gew.-% Bitumen,
- 0 bis 20 Gew.-% Verflüssigungsmittel,
- 10 bis 30 Gew.-% mineralische oder metallische Füllstoffe,
- 0 bis 10 Gew.-% eines Zusatzes (von Zusätzen), der bzw. die die Klebeeigenschaften verbessert bzw. verbessern,
- 0 bis 25 Gew.-% wenigstens einer Strukturier- und Klebekomponente, die aus der Gruppe bestehend aus thermoplastischen Elastomer-Polymeren, Polyurethan-Präpolymeren und Harz-/Härtemittel-Gemischen ausgewählt ist.

9. Verwendung nach einem der Ansprüche 6 und 7, **dadurch gekennzeichnet, daß** die Zusammensetzung (3) aus einem Gemisch auf Basis eines reaktiven Harzes besteht, vorzugsweise aus:
- 15 bis 25 Gew.-% Lösungsmittel,
- 15 bis 25 Gew.-% Verflüssigungsmittel,
- 15 bis 35 Gew.-% mineralische und/oder metallische Füllstoffe,
- 0 bis 5 Gew.-% eines Zusatzes, welcher die Klebeeigenschaften verbessert,
- 20 bis 40 Gew.-% eines PUR-Prepolymers oder eines Harz-/Härtemittel-Gemischs.

10. Verwendung nach einem der Ansprüche 6 und 7, **dadurch gekennzeichnet, daß** die Zusammensetzung (3) aus einem lösungsmittelfreien Gemisch auf Basis eines Polyurethan-Prepolymers besteht, vorzugsweise aus:
- 30 bis 40 Gew.-% Verflüssigungsmittel,
- 15 bis 30 Gew.-% mineralische(n) und/oder metallische(n) Füllstoff(e),
- 0 bis 5 Gew.-% eines Zusatzes, welcher die Klebeeigenschaften verbessert,
- 30 bis 50 Gew.-% eines Polyurethan-Prepolymers.

11. Verwendung nach einem der Ansprüche 6 bis 8, **dadurch gekennzeichnet, daß** das Bitumen ein Bitumen aus der Direktdestillation, beispielsweise vom Typ 70/100 ist, und daß der wenigstens eine mineralische oder metallische Füllstoff aus der Gruppe bestehend aus Schieferpulver, Aluminiumpaste, Aluminosilikaten, Kreide und Glimmer ausgewählt ist.

12. Verwendung nach Anspruch 11, **dadurch gekennzeichnet, daß** der Füllstoff aus Leafing-Glimmer- oder -Aluminiumplättchen besteht.

13. Verwendung nach einem der Ansprüche 6 bis 12, **dadurch gekennzeichnet, daß** der Überzug aus einer Einkomponentenzusammensetzung besteht.

14. Verwendung nach einem der Ansprüche 6 bis 9 und 11 bis 13, **dadurch gekennzeichnet, daß** der Überzug aus einer Zweikomponentenzusammensetzung besteht, von der eine erste Komponente insbesondere ein Polyol und deren zweite Komponente insbesondere ein Isocyanat umfaßt.

15. Verwendung nach einem der Ansprüche 6 bis 9 und 11 bis 13, **dadurch gekennzeichnet, daß** der Überzug aus einer Zweikomponentenzusammensetzung besteht, von der eine erste Komponente insbesondere ein Epoxydharz und deren zweite Komponente insbesondere ein Aminohärtungsmittel umfaßt.

16. Verwendung nach einem der Ansprüche 6 bis 15, **dadurch gekennzeichnet, daß** der Überzug einen zusätzlichen verstärkenden Füllstoff in Form von Fasern (5) geringer Länge, vorzugsweise Fasern aus einem Polymermaterial umfaßt.

17. Isolier- und Abdichtungsverbundsystem für ein Dach, das einen im wesentlichen ebenen Träger bildet, wie zum Beispiel ein Betonterrassendach, wobei das System mittels des Verfahrens nach einem der Ansprüche 1 bis 5 erhalten wird, **dadurch gekennzeichnet, daß** es eine geschichtete Verbundstruktur aufweist und - ausgehend von dem Träger (2) - aus folgendem besteht, nämlich einerseits aus einer getrockneten oder polymerisierten, durchgehenden Überzugsschicht (3) mit glatter Oberseite, die gleichzeitig eine Barriere mit kontrolliertem Durchlaß für den Wasserdampf, eine Nivellierbeschichtung und ein Mittel für die Oberflächenhaftung auf dem Träger (2) bildet, andererseits aus einer Isolierschicht (1), die durch die Überzugsschicht (3) an dem Träger (2) befestigt ist, wobei die Isolierschicht (1) vorzugsweise durch Nebeneinanderanordnen separat ausgebildeten streifen- oder plattenförmiger Elemente gebildet ist, sowie schließlich aus einem Dichtungsüberzug (6), der wenigstens eine Schicht aus bituminösen Membranen, synthetischen Membranen oder ähnlichen umfaßt, deren benachbarte Randbereiche sich vorteilhafterweise wenigstens teilweise überlappen.
